# EUROPEAN PATENT SPECIFICATION

(11) **EP 2 667 398 B1**
(45) Date of publication and mention of the grant of the patent: **21.01.2015**
(21) Application number: 13002568.7
(22) Date of filing: 16.05.2013
(51) Int. Cl.: H01H 83/04, H02H 3/33, H01H 83/14

(54) **Residual current operated circuit breaker with self-test device**
Reststrombetriebener Schutzschalter mit Selbstprüfungsvorrichtung
Disjoncteur actionné par courant résiduel avec dispositif d'autovérification

(30) Priority: 22.05.2012 IT MI20120884
(43) Date of publication of application: 27.11.2013
(73) Proprietor: GEWISS S.p.A., 24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- EP-A1- 1 916 692
- EP-A2- 2 068 338

## Description

The present invention relates to a residual current operated circuit breaker with self-test device.

As is known, residual current operated circuit breakers are normally provided in domestic and industrial systems in order to prevent a fault current from causing danger for users and for the loads connected to the electrical line.

Essentially, the residual current operated circuit breaker, upon detecting the presence of the fault current, releases the line, thus interrupting the supply of power to the load or loads arranged downstream.

After the release of the residual current operated circuit breaker, and once the correct operating conditions for the system have been restored, the residual current operated circuit breaker must be reset.

The operating conditions are often restored spontaneously because the fault is of a transient type, caused by overvoltage.

This breaker is generally reset manually, by acting on an adapted reset lever.

The conventional residual current operated circuit breakers are also provided with a test button, by means of which it is possible to release the circuit breaker, simulating a fault, in order to check the correct operation of the release system.

However, as is known, the test is not always performed, both due to forgetfulness and because the interruption of electrical power causes inconvenience.

Circuit breakers are known that obviate the drawback of the interruption of the electric power supply during the test, by having secondary contacts that ensure the supply of electric power while the primary contacts are released in order to test the system.

Regarding the residual current operated devices with automatic test, adapted to check the integrity of the functions for protection against direct and indirect contacts, the need arises of circuits that are reliable, simple and cheap in order to allow to perform the test while maintaining the continuity of service of the system.

At present, a residual current operated circuit breaker with self-test is known in which function testing may be executed manually with the test button, as well as by means of a self-diagnostic cycle without loss of continuity of service, managed by an electronic control and actuation board and by a specific resetting mechanism. In such system, in order to maintain continuity of operation during the self-test cycle, the circuit has a fixed contact and two movable contacts, which are mutually independent, are connected electrically in parallel, and are moved and managed by an electronic control board. The contacts allow both the flow of current during the entire testing cycle and the checking of the electromagnetic integrity of the circuit breaker.

EP1916692 discloses the system cited above.

EP1562213 discloses a self-diagnostic and self-reset system for a residual current operated circuit breaker.

EP2068338 discloses a fault current circuit breaker and a method of implementing a self-test for a fault current circuit breaker.

The aim of the present invention is to provide a residual current operated circuit breaker with a self-test device that is improved with respect to systems of the cited prior art.

Within the scope of this aim, an object of the invention is to provide a residual current operated circuit breaker with self-test device that can be manufactured at lower costs than the known systems.

Another object of the invention is to provide a residual current operated circuit breaker with self-test device that is constituted by a reduced number of components.

Another object is to provide a residual current operated circuit breaker with self-test device that has substantially reduced dimensions with respect to devices of the conventional type.

Another object of the present invention is to provide a device that ensures continuity of service of the system during the test cycle and is also capable of giving the greatest assurances of reliability and safety in use.

This aim and these and other objects that will become better apparent hereinafter are achieved by a residual current operated circuit breaker with self-test device, including a first series of terminals and a second series of terminals; the first series of terminals being connected to primary movable contacts and the second series of terminals being connected to secondary movable contacts, an actuation relay adapted to act on a tripping mechanism in order to open the primary movable contacts with respect to the secondary movable contacts, in case of tripping of the residual current operated system; a self-test device that performs a test of the circuit breaker without interrupting the supply of current between the series of terminals; the circuit breaker being **characterized in that** it includes a means for locking the mutual movement of the primary and secondary contacts during the test, maintaining the flow of current between the contacts.

Further characteristics and advantages will become better apparent from the description of preferred but not exclusive embodiments of the invention, illustrated by way of non-limiting example in the accompanying drawings, wherein:

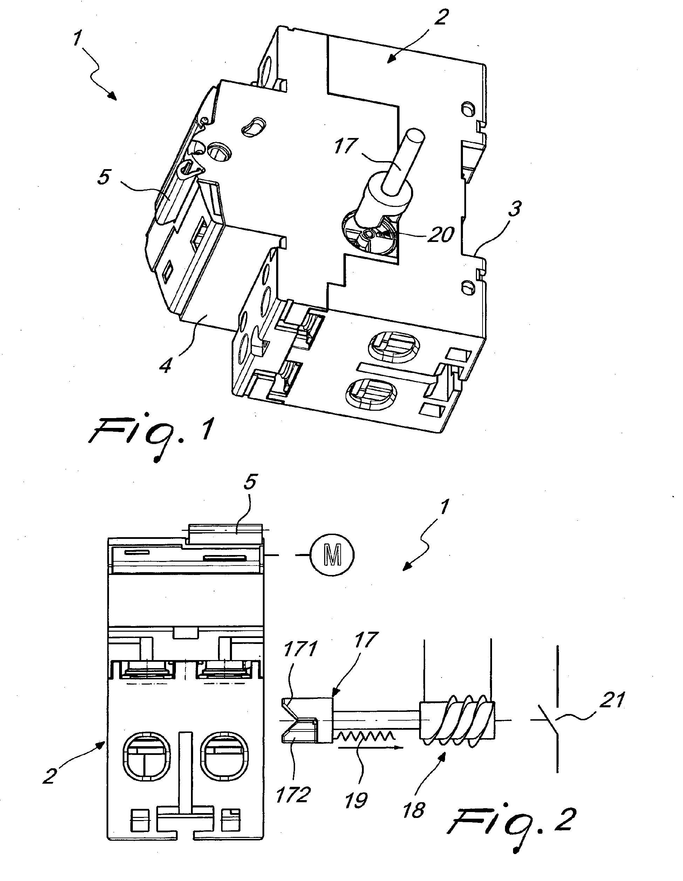

Figure 1 is a perspective view of the residual current operated circuit breaker with self-test device according to the present invention;
Figure 2 is a front view of the circuit breaker, showing schematically a part of the self-test device;

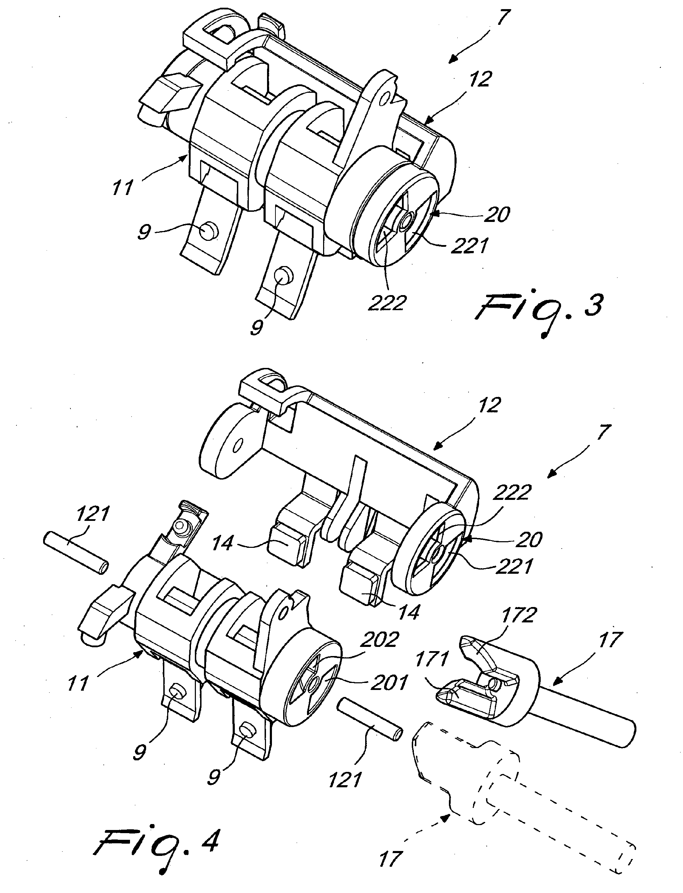

Figure 3 is a perspective view of the movable contact holder;
Figure 4 is an exploded perspective view of the movable contact holder;
Figure 5 is a schematic view of the self-test device;

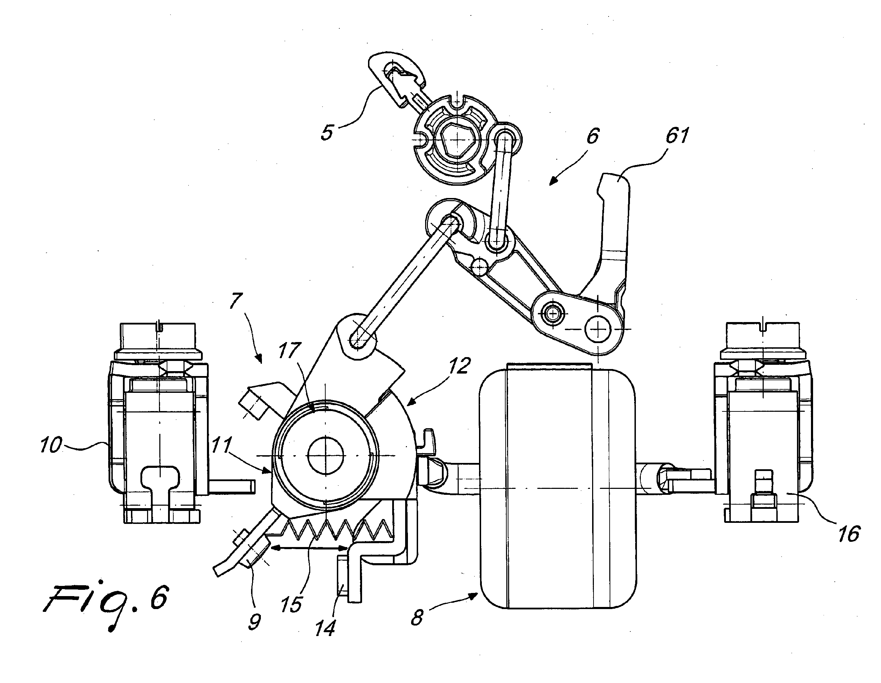

Figure 6 is a side view of the free tripping mechanism and of part of the self-test device, shown in the condition in which the circuit breaker is open and the contact holder levers are free;
Figure 7 is a view, similar to the preceding one, in the condition in which the circuit breaker is closed with the levers free;
Figure 8 is a view, similar to the preceding one, in the condition in which the circuit breaker is closed with the levers locked;
Figure 9 is view, similar to the preceding one, in the condition in which the circuit breaker has tripped and the levers are mutually locked;
Figure 10 is a view, similar to the preceding one, in the condition in which the circuit breaker is open with the levers locked;
Figure 11 is a view, similar to the preceding one, in the condition in which the breaker is closed and the contact holder levers are released;

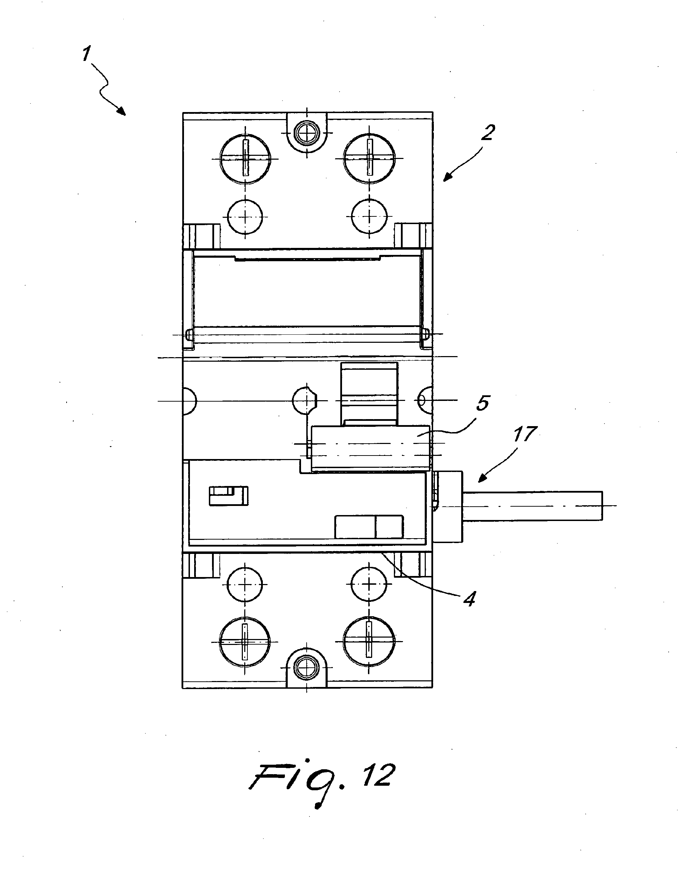

Figure 12 is a plan view of the residual current operated circuit breaker with self-test device according to the present invention;

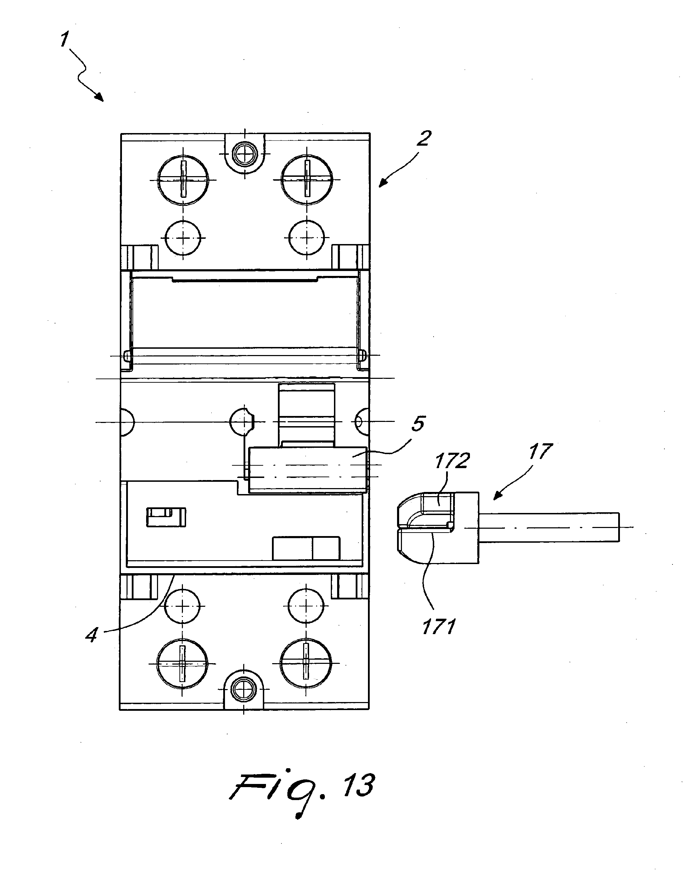

Figure 13 is a view, similar to the preceding one, showing the release key separated from the casing of the circuit breaker.

With reference to the cited figures, the residual current operated circuit breaker with self-test device, according to the invention, generally designated by the reference numeral 1, comprises a casing 2 that has the classic standardized shape for coupling to a DIN rail, not visible in the figure, by means of a coupling means 3.

The casing 2 has, on the front face, a protrusion 4 in which the actuation means, of a per se known type, is positioned; the actuation means comprises a handle 5 adapted to actuate a free tripping mechanism 6, which includes an indicator 61.

The free tripping mechanism 6 actuates a movable contact holder 7, which is connected to a residual current circuit 8 that is constituted by a relay and by a differential transformer.

The movable contact holder 7 has a pair of main movable contacts 9, which are connected electrically to terminals, constituted by clamps 10, of the circuit breaker, by means of flexible conductors, not shown in the figures.

The main movable contacts 9 are mounted on a primary lever 11 that is pivoted on pivots 121 together with a secondary lever 12. The levers 11 and 12 therefore can move with respect to each other and rotate about the same rotation axis.

The secondary lever 12 has a pair of secondary movable contacts 14.

The main movable contacts 9 are equipped with springs that ensure a contact pressure and close the main electrical circuit when resting on the secondary movable contacts 14 associated with the secondary lever 12.

The secondary movable contacts 14 mounted on the secondary lever 12 perform two distinct functions: in the normal operation of the circuit breaker, they behave like traditional fixed contacts, while in the self-test step they perform the function of movable contacts.

The secondary movable contacts 14 are connected electrically to input terminals 16, by virtue of flexible conductors not shown in the figures.

A repulsion spring 15 is inserted between the two contact holder levers 11 and 12 and has the purpose of maintaining and/or restoring the position of the contacts in the open position.

A locking key 17, actuated by an actuator 18, for example a coil or solenoid, and in contrast with a spring 19, engages a seat 20 of the contact holder 7, defining at least two operating positions: a position for free mutual rotation of the levers 11 and 12 and a position for locking their mutual movement.

In normal operating conditions, the contrast spring 19 keeps the locking key 17 in the position of mutual disengagement between the levers 11 and 12.

The seat 20 of the contact holder 7 is constituted by two pairs of cavities provided in the contact holder levers 11 and 12: a first pair of seats 201 and 202, formed in the primary lever 11, and a second pair of seats 221 and 222, formed in the secondary lever 12.

The locking key 17 has two ends 171 and 172 that are formed with inclined planes, each of which engages one of the cavities of each pair; the first end 171 engages the cavities 201 and 221 and the second end 172 engages the cavities 202 and 222.

In the free position, the ends 171 and 172 of the key 17 are in any case inserted in the respective cavities 221 and 222 of the secondary lever 12, which is always engaged in the seat 20 of the contact holder 7 and always has the correct coupling position.

During the self-test step, the locking key 17 locks the mutual rotation between the two levers 11 and 12 by virtue of the insertion of the ends 171 and 172 also in the cavities 201 and 202 of the primary lever 11, therefore keeping the primary and secondary movable electric contacts in the closed position. This condition maintains and ensures continuity and contact pressure, both during the automatic release step and when the mechanism is in the open or tripped position.

The shape of the locking key 17, constituted by the two ends 171 and 172, and of the respective seat 20, constituted by the two pairs of cavities 201, 202 and 221, 222, in the contact holder levers 11 and 12, allows coupling, therefore locking, only when the circuit breaker has the handle 5 and the contacts 9 in the closed position. This shape allows both the entry and the expulsion of the key 17 whenever it is necessary to uncouple the levers 11 and 12 and open the contacts correspondingly.

The extraction of the locking key 17, i.e., the disengagement of its ends 171 and 172 from the seats 201 and 202 of the primary lever 11, is performed by the return spring 19 and by a thrust generated by the coupling surfaces, which are appropriately sized, between the ends of the locking key and the cavities of the contact supporting levers.

A different inclination of the cavities and of the ends of the locking key determines different forces and speeds required to hold or release them.

An electrical contact 21, connected mechanically to the locking key 17, indicates the position thereof to an electronic control unit 22.

The operating cycle, performed automatically by the self-test device of the circuit breaker according to the present invention, is as follows.

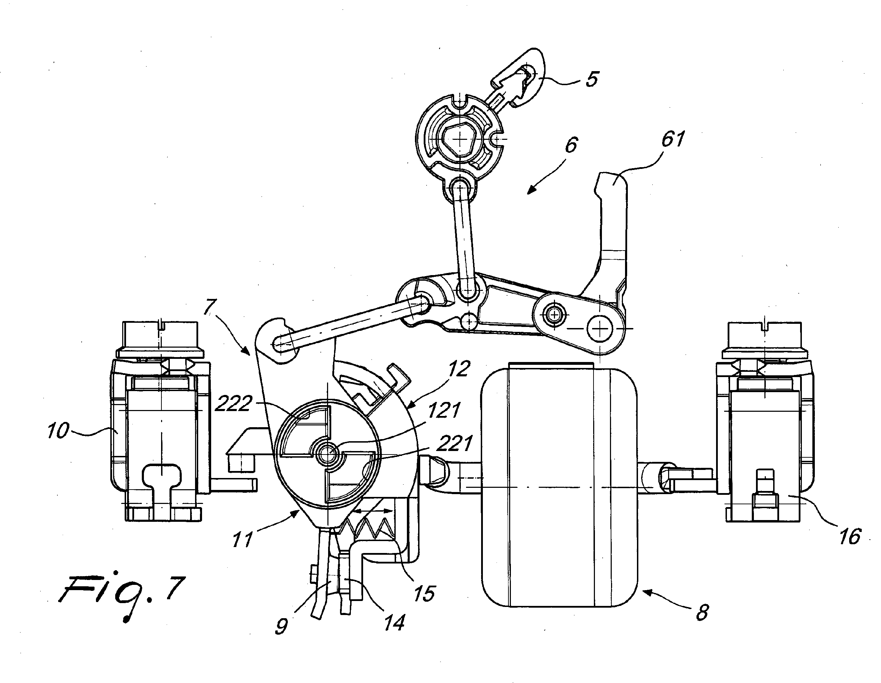

In the normal condition of operation, the residual current operated circuit breaker 1 is in the closed position, with the handle closed and the contacts closed, and the contact holder levers are free to rotate with respect to each other, as visible in Figure 7.

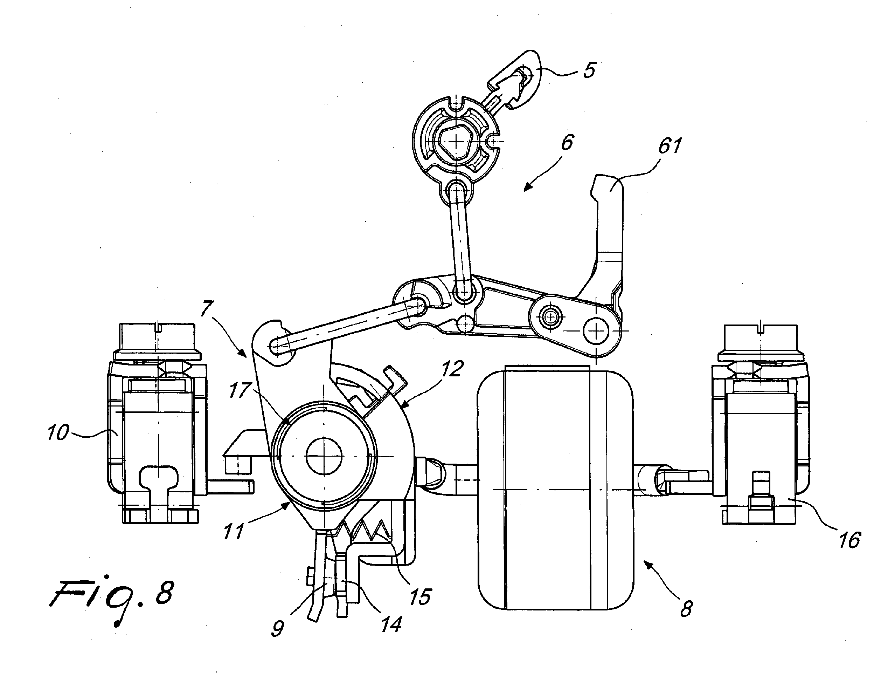

The self-test operation begins with the control unit 22 activating the actuator 18 for the insertion of the locking key 17 (Figure 8).

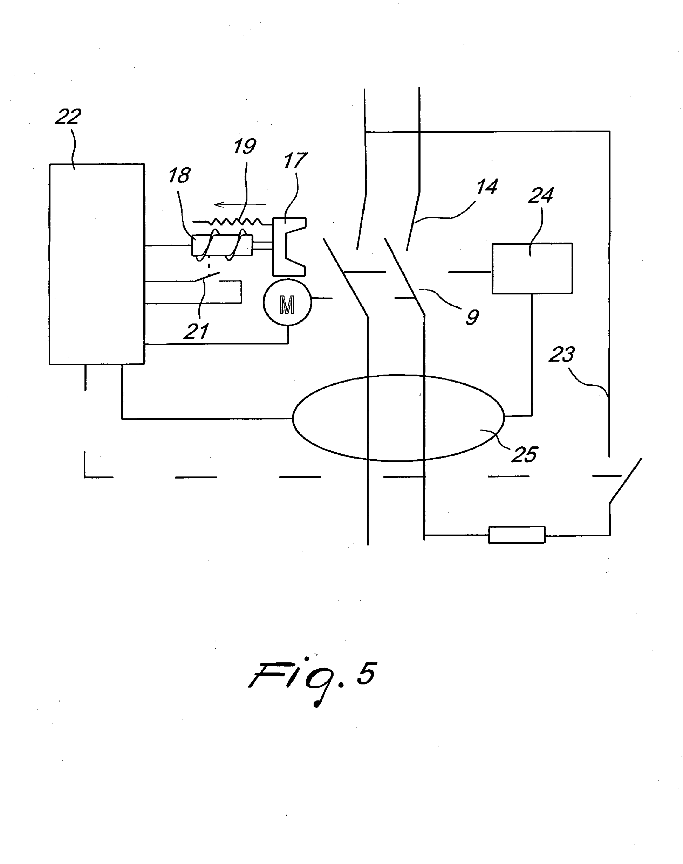

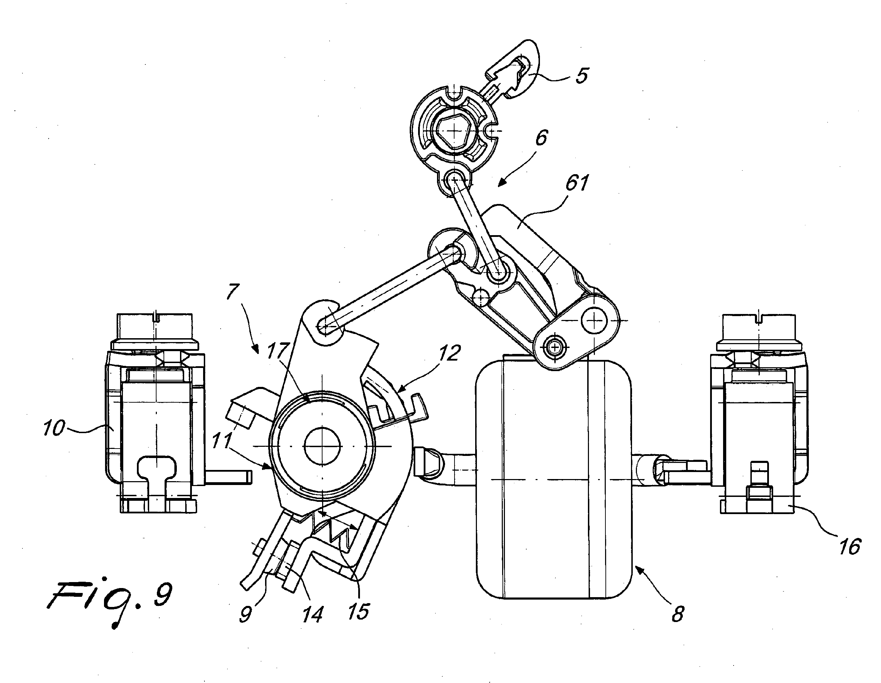

As can be seen in Figure 9, the control unit 22 produces the release of the residual current operated circuit breaker by virtue of the closure of a test circuit 23 (shown schematically in Figure 5).

The circuit of the residual current operated circuit breaker is shown schematically in Figure 5 and designated by the reference numerals 24 and 25.

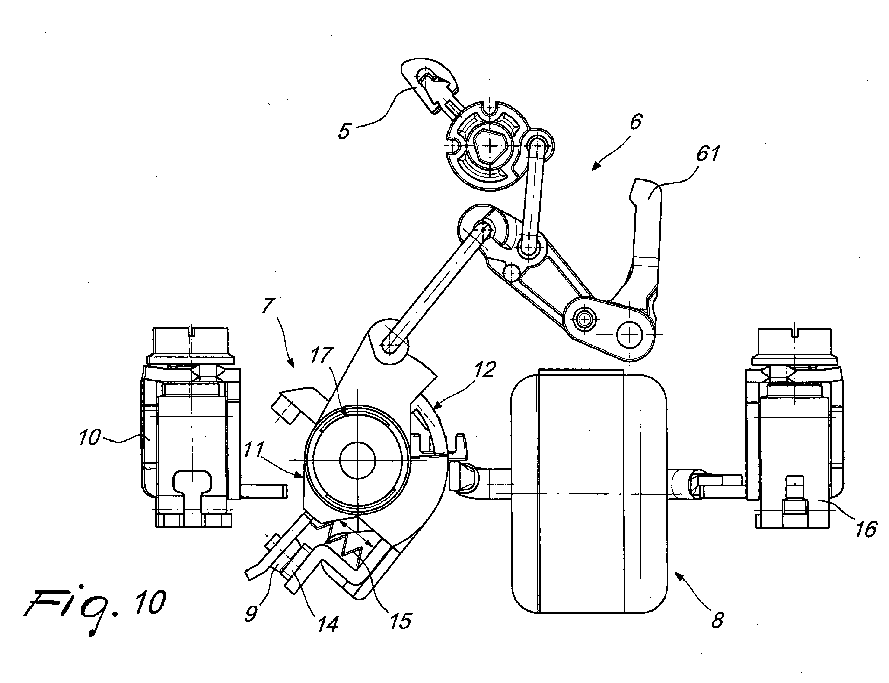

The mechanism 6 of the residual current operated circuit breaker moves to the open position while the contacts remain closed by virtue of the action of the locking key, which locks the levers to each other. This condition is shown in Figure 10.

After detecting the position of the mechanism 6, the control unit 22 activates the actuator to reposition the mechanism 6 in the condition of normal operation.

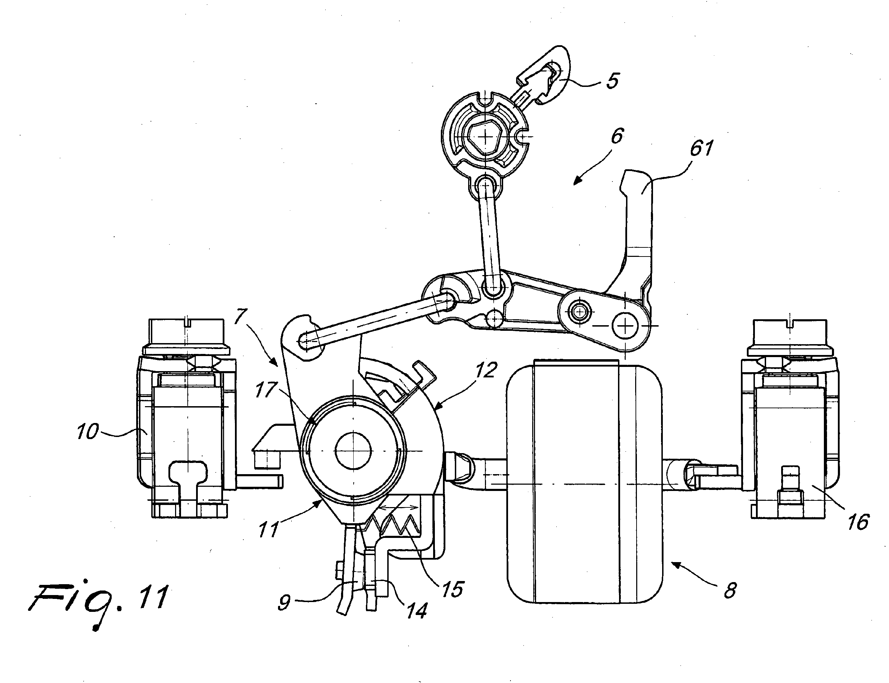

The control unit 22 actuates the exit of the locking key 17, which disengages the primary lever 11 from the secondary lever 12 of the contact holder 7, as can be seen in Figure 11.

All the movements are monitored by virtue of position contacts.

During the cycle described above, since the control unit 22 is connected to the toroidal core 25, in case of fault due to residual current leakage, the actuator 18 of the locking key 17 is powered down, causing the instantaneous opening of the contacts 9 and 14.

The primary movable contacts 9 have an operation that is similar to that of the movable contacts of a traditional circuit breaker, while the secondary movable contacts 14 behave like fixed contacts of a traditional circuit breaker during normal operation of the circuit breaker.

In case of tripping, the primary movable contacts 9 trip, separating from the secondary movable contacts 14 that remain in the position for normal operation.

In performing the self-test, the secondary movable contacts 14 follow the opening movement of the primary movable contacts 9, remaining connected to them and maintaining the continuity of the power supply, while the self-test device tests the apparatus in a per se known manner.

In practice it has been found that the invention achieves the intended aim and objects, a residual current operated circuit breaker with self-test device having been provided which can be manufactured with a substantial reduction in production costs and ensures continuity of service on the system during the residual current testing cycle.

The circuit breaker according to the present invention includes a self-test device that is provided by means of a reduced number of components and with an important reduction in the dimensions of the device itself.

## Claims

1. A residual current operated circuit breaker with self-test device, comprising a first set of terminals (10) and a second set of terminals (16); said first set of terminals being connected to primary movable contacts (9) and said second set of terminals being connected to secondary movable contacts (14), an actuation relay adapted to act on a tripping mechanism in order to open said primary movable contacts with respect to said secondary movable contacts, in case of tripping of the residual current operated system; a self-test device that performs a test of said circuit breaker without interrupting the supply of current between said sets of terminals; said circuit breaker being **characterized in that** it comprises a lock means (17) locking the mutual movement of said primary and secondary contacts during said test, maintaining the flow of current between said contacts.

2. The circuit breaker according to claim 1, **characterized in that** it comprises a contact holder that comprises a primary lever pivoted on common pivots together with a secondary lever; primary movable contacts being mounted on said primary lever, said secondary movable contacts being mounted on said secondary lever; said levers being movable with respect to each other and rotating about a same rotation axis that is defined by said pivots; a temporary lock means locks the mutual rotation of said levers and keeps said primary and secondary contacts in electrical contact.

3. The circuit breaker according to claim 2, **characterized in that** it comprises an elastic repulsion member that is arranged between said levers and is adapted to maintain and/or restore an open position between said contacts.

4. The circuit breaker according to claim 2, **characterized in that** said primary movable contacts comprise contact springs that maintain a contact pressure between said primary and secondary contacts in a closed position of said contacts.

5. The circuit breaker according to claim 2, **characterized in that** said temporary lock means comprises a locking key, which is actuated by an actuator, in contrast with an elastic return member, and is adapted to engage a seat of said contact holder, defining at least two operating positions: a position for free mutual rotation of said primary and secondary levers and a position for locking the mutual movement of said levers.

6. The circuit breaker according to claim 5, **characterized in that**, in normal operating conditions, said elastic return member keeps said locking key in said position of mutual disengagement between said levers.

7. The circuit breaker according to claim 5, **characterized in that** said seat of said contact holder is constituted by two pairs of cavities provided in said contact holder levers: a first pair of seats, formed in said primary lever, and a second pair of seats, formed in said secondary lever; said locking key having two ends, formed with inclined planes; each one of said ends engages one of said cavities of each one of said pairs.

8. The circuit breaker according to claim 7, **characterized in that** in said position for free mutual movement between said primary and secondary levers said ends of said key are inserted in said cavities of said secondary lever.

9. The circuit breaker according to claim 7, **characterized in that** during said self-test said locking key locks the mutual rotation between said primary and secondary levers by virtue of the insertion of said ends in the cavities of said primary lever and of said secondary lever.

10. The circuit breaker according to claim 7, **characterized in that** said locking key is extracted from said cavities of said primary lever by the action of said elastic return member and of a thrust generated by coupling surfaces between said ends of said locking key and said cavities of said contact holder levers.

## Patentansprüche

1. Ein reststrombetriebener Schutzschalter mit Selbstprüfungsvorrichtung, der einen ersten Satz von Anschlusspunkten (10) und einen zweiten Satz von Anschlusspunkten (16) umfasst, wobei der erste Satz von Anschlusspunkten mit beweglichen Primärkontakten (9) verbunden ist und der zweite Satz von Anschlusspunkten mit beweglichen Sekundärkontakten (14) verbunden ist, ein Betätigungsrelais, ausgebildet, um auf einen Auslösemechanismus einzuwirken, um die beweglichen Primärkontakte im Falle des Auslösens des reststrombetriebenen Systems im Verhältnis zu den beweglichen Sekundärkontakten zu öffnen; eine Selbstprüfungsvorrichtung, die eine Prüfung des Schutzschalters vornimmt, ohne die Stromzufuhr zwischen den Sätzen von Anschlusspunkten zu unterbrechen; wobei der Schutzschalter **dadurch gekennzeichnet ist, dass** er ein Verriegelungsmittel (17) umfasst, das die Relativbewegung der Primär- und Sekundärkontakte während der Prüfung blockiert, wobei der Stromfluss zwischen den Kontakten aufrechterhalten wird.

2. Der Schutzschalter gemäß Anspruch 1, **dadurch gekennzeichnet, dass** er einen Kontakthalter umfasst, der einen primären Hebel umfasst, drehgelenkig an gemeinsamen Drehzapfen zusammen mit einem sekundären Hebel angeordnet; wobei bewegliche Primärkontakte an dem primären Hebel montiert sind, wobei die beweglichen Sekundärkontakte an dem sekundären Hebel montiert sind; wobei die Hebel im Verhältnis zueinander beweglich sind und sich um eine selbe Drehachse drehen, die von den Drehzapfen bestimmt wird; ein temporäres Verriegelungsmittel blockiert die Drehung der Hebel zueinander und hält die primären und sekundären Kontakte in elektrischem Kontakt.

3. Der Schutzschalter gemäß Anspruch 2, **dadurch gekennzeichnet, dass** er ein elastisches Abstoßungsglied umfasst, das zwischen den Hebeln angeordnet und ausgebildet ist, um eine offene Position zwischen den Kontakten aufrechtzuerhalten und/oder wiederherzustellen.

4. Der Schutzschalter gemäß Anspruch 2, **dadurch gekennzeichnet, dass** die beweglichen Primärkontakte Kontaktfedern umfassen, die in einer geschlossenen Position der Kontakte einen Kontaktdruck zwischen den Primär- und Sekundärkontakten aufrechterhalten.

5. Der Schutzschalter gemäß Anspruch 2, **dadurch gekennzeichnet, dass** das temporäre Verriegelungsmittel einen Verriegelungsschlüssel umfasst, der in Kontrast zu einem elastischen Rückstellglied von einem Betätigungselement betätigt wird und ausgebildet ist, um in einen Sitz des Kontakthalters einzugreifen, wobei mindestens zwei Arbeitspositionen bestimmt werden: eine Position zur freien Drehung des primären und des sekundären Hebels zueinander und eine Position zur Blockierung der Relativbewegung der Hebel.

6. Der Schutzschalter gemäß Anspruch 5, **dadurch gekennzeichnet, dass** unter normalen Arbeitsbedingungen das elastische Rückstellglied den Verriegelungsschlüssel in der Position gegenseitiger Entkupplung der Hebel hält.

7. Der Schutzschalter gemäß Anspruch 5, **dadurch gekennzeichnet, dass** der Sitz des Kontakthalters aus zwei Paaren von Vertiefungen besteht, die in den Kontakthalter-Hebeln angebracht sind: einem ersten Paar von Sitzen, geformt in dem primären Hebel, und einem zweiten Paar von Sitzen, geformt in dem sekundären Hebel; wobei der Verriegelungsschlüssel zwei Enden hat, geformt mit schrägen Ebenen; jedes der Enden greift in eine der Vertiefungen jedes der Paare ein.

8. Der Schutzschalter gemäß Anspruch 7, **dadurch gekennzeichnet, dass** in der Position für die freie Relativbewegung zwischen dem primären und dem sekundären Hebel die Enden des Schlüssels in die Vertiefungen des sekundären Hebels eingeführt werden.

9. Der Schutzschalter gemäß Anspruch 7, **dadurch gekennzeichnet, dass** während der Selbstprüfung der Verrzegelungsschlüssel die Drehung des primären und des sekundären Hebels zueinander durch des Einführen der Enden in die Vertiefungen des primären Hebels und des sekundären Hebels blockiert.

10. Der Schutzschalter gemäß Anspruch 7, **dadurch gekennzeichnet, dass** der Verriegelungsschlüssel aus den Vertiefungen des primären Hebels durch die Wirkung des elastischen Rückstellglieds und eines Schubs herausgezogen wird, der durch die Kopplung von Oberflächen zwischen den Enden des Verriegelungsschlüssels und den Vertiefungen der Kontakthalter-Hebel erzeugt wird.

## Revendications

1. Disjoncteur à fonctionnement à courant résiduel avec un dispositif d'autotest, comprenant un premier ensemble de bornes (10) et un deuxième ensemble de bornes (16) ; ledit premier ensemble de bornes étant relié à des contacts mobiles primaires (9) et ledit deuxième ensemble de bornes étant relié à des contacts mobiles secondaires (14), un relais d'actionnement apte à agir sur un mécanisme de déclenchement afin d'ouvrir lesdits contacts mobiles primaires par rapport aux dits contacts mobiles secondaires, en cas de déclenchement du système à fonctionnement à courant résiduel ; un dispositif d'autotest qui effectue un test dudit disjoncteur sans interrompre l'alimentation de courant entre lesits ensembles de bornes ; ledit disjoncteur étant **caractérisé en ce qu'**il comprend un moyen de verrouillage (17) verrouillant le déplacement réciproque desdits contacts primaires et secondaires au cours dudit test, en maintenant le flux de courant entre lesdits contacts.

2. Disjoncteur selon la revendication 1, **caractérisé en ce qu'**il comprend un porte-contact qui comprend un levier primaire pivoté sur des pivots communs avec un levier secondaire ; des contacts mobiles primaires étant montés sur ledit levier primaire, lesdits contacts mobiles secondaires étant montés sur ledit levier secondaires ; lesdits leviers étant mobiles l'un par rapport à l'autre et tournant autour d'un même axe de rotation qui est défini par lesdits pivots ; un moyen de verrouillage provisoire verrouille la rotation réciproque desdits leviers et maintient lesdits contacts primaires et secondaires en contact électrique.

3. Disjoncteur selon la revendication 2, **caractérisé en ce qu'**il comprend un organe de répulsion élastique qui est agencé entre lesdits leviers et est apte à maintenir et/ou à rétablir une position ouverte entre lesdits contacts.

4. Disjoncteur selon la revendication 2, **caractérisé en ce que** lesdits contacts mobiles primaires comprennent des ressorts de contacts qui maintiennent une pression de contact entre lesdits contacts primaires et secondaires à une position fermée desdits contacts.

5. Disjoncteur selon la revendication 2, **caractérisé en ce que** ledit moyen de verrouillage provisoire comprend une clé de verrouillage, qui est actionnée par un actionneur, par contraste avec un organe de retour élastique, et est apte à se mettre en prise avec un siège dudit porte-contact, définissant au moins deux positions de fonctionnement : une position de rotation réciproque libre desdits leviers primaire et secondaire et une position de verrouillage du déplacement réciproque desdits leviers.

6. Disjoncteur selon la revendication 5, **caractérisé en ce que**, dans des conditions de fonctionnement normal, ledit organe de retour élastique maintient ladite clé de verrouillage à ladite position de mise hors prise réciproque entre lesdits leviers.

7. Disjoncteur selon la revendication 5, **caractérisé en ce que** ledit siège dudit porte-contact est constitué de deux paires de cavités fournies dans lesdits leviers de porte-contact : une première paire de sièges, formés dans ledit levier primaire, et une deuxième paire de sièges, formés dans ledit levier secondaire ; ladite clé de verrouillage ayant deux extrémités, formées avec des plans inclinés ; chacune desdites extrémités se met en prise avec l'une desdites cavités de chacune desdites paires.

8. Disjoncteur selon la revendication 7, **caractérisé en ce que**, à ladite position de déplacement réciproque libre entre lesdits leviers primaire et secondaire, lesdites extrémités de ladite clé sont insérées dans lesdites cavités dudit levier secondaire.

9. Disjoncteur selon la revendication 7, **caractérisé en ce que**, au cours dudit autotest, ladite clé de verrouillage verrouille la rotation réciproque entre lesdits leviers primaire et secondaire sous l'effet de l'insertion desdites extrémités dans les cavités dudit levier primaire et dudit levier secondaire.

10. Disjoncteur selon la revendication 7, **caractérisé en ce que** ladite clé de verrouillage est extraite desdites cavités dudit levier primaire par l'action dudit organe de retour élastique et d'une poussée générée par des surfaces d'accouplement entre lesdites extrémités de ladite clé de verrouillage et lesdites cavités desdits leviers de porte-contact.
